(19) **Europäisches Patentamt European Patent Office Office européen des brevets**

(11) **EP 1 552 881 B1**

(12) **EUROPEAN PATENT SPECIFICATION**

(45) Date of publication and mention
of the grant of the patent:
**12.03.2014 Bulletin 2014/11**

(51) Int Cl.:
***B01J 23/44*** (2006.01)     ***C08F 8/04*** (2006.01)
***C10G 15/10*** (2006.01)

(21) Application number: **03733439.8**

(22) Date of filing: **16.06.2003**

(86) International application number:
**PCT/JP2003/007611**

(87) International publication number:
**WO 2003/106019 (24.12.2003 Gazette 2003/52)**

(54) **CATALYST FOR PETROLEUM RESIN HYDROGENATION AND PROCESS FOR PRODUCING HYDROGENATED PETROLEUM RESIN**

KATALYSATOR ZUR ERDÖLHARZHYDRIERUNG UND VERFAHREN ZUR HERSTELLUNG VON HYDRIERTEM ERDÖLHARZ

CATALYSEUR POUR L'HYDROGENATION DE RESINE DE PETROLE ET PROCEDE DE PRODUCTION DE RESINE DE PETROLE HYDROGENEE

(84) Designated Contracting States:
**AT BE BG CH CY CZ DE DK EE ES FI FR GB GR HU IE IT LI LU MC NL PT RO SE SI SK TR**

(30) Priority: **18.06.2002 JP 2002176585**

(43) Date of publication of application:
**13.07.2005 Bulletin 2005/28**

(73) Proprietors:
• **IDEMITSU KOSAN COMPANY LIMITED Tokyo (JP)**
• **Sued-Chemie Catalysts Japan, Inc. Shibuya-ku, Tokyo 151-0053 (JP)**

(72) Inventors:
• **YAMAKAWA, Fumio**
  **Ichihara-shi, Chiba 299-0107 (JP)**
• **KITAMURA, Tadakuni c/o Sued-chem Catalysts JP,Inc**
  **Shibuya-ku, Tokyo 151-0053 (JP)**
• **CHINDA, T.,**
  **Sued-Chemie Catalysts Japan, Inc.**
  **Nei-gun, Toyama 939-2753 (JP)**

(74) Representative: **Gille Hrabal**
  **Brucknerstrasse 20**
  **40593 Düsseldorf (DE)**

(56) References cited:
**EP-A1- 0 947 248**    **JP-A- 2 127 409**
**JP-A- 63 284 137**    **US-A- 4 540 480**

**Description**

TECHNICAL FIELD

The present invention relates to a hydrogenation catalyst for a petroleum resin containing a sulfur component and a process for producing a hydrogenated petroleum resin.

BACKGROUND ART

In the majority of instances, a cyclopentadiene based compound and a vinyl aromatic compound that are used for the production of a hydrogenated petroleum resin originate from a spent distillate of thermally cracked naphtha or the like, and usually contain sulfur components of 10 to 500 ppm by mass expressed in terms of sulfur.

Since a part of the sulfur components is imparted with polymerizability, it is incorporated into a produced petroleum resin at the time of polymerization of a cyclopentadiene based compound and / or a vinyl aromatic compound, and in a subsequent hydrogenation step it becomes catalyst poison for a generally used hydrogenation catalyst such as palladium, platinum and nickel, thereby bringing about marked deterioration of the catalytic activity.

In the case of employing a nickel based catalyst such as nickel, nickel - tungsten and nickel - molybdenum, the metallic nickel is made to turn into nickel sulfide by a sulfur component in a petroleum resin or by hydrogen sulfide which is produced by hydrodesulfurization, thus resulting in deterioration of the catalytic activity.

Moreover in the case of employing a noble metal based catalyst such as palladium, platinum, ruthenium and rhodium, a sulfur component in a petroleum resin or hydrogen sulfide which is produced by hydrodesulfurization is adsorbed onto a surface of a metallic catalyst, whereby the catalytic activity is markedly deteriorated.

For these reasons, it is said in general that a noble metal based catalyst is poor in sulfur resistance.

As a hydrogenation catalyst having enhanced sulfur resistance, Japanese Patent Publication No. 61201 / 1987 (Showa 62) discloses a catalyst in which a metal or metals selected from platinum and / or rhodium, palladium, ruthenium and rhenium are supported, but does not describe in detail, the amount of each of the metals supported nor the ratio of the metals supported.

In addition, the catalyst which is disclosed in the Japanese Patent Publication No. 61201 / 1987 (Example 5) is a catalyst containing 0.25% by mass of Pd - 1.75% by mass of Pt / alumina, and is greatly different from the catalyst according to the present invention in terms of chemical composition. Further, EP 0 947 248 A1 discloses a catalyst for the hydrogenation of aromatics in sulpher-containing hydrocarbon fractions.

The present invention has been made in the light of the above-mentioned circumstances, and it is the subject thereof to develop a catalyst which has a long-term service life as well as a high hydrogenation activity for a petroleum resin containing a sulfur component.

DISCLOSURE OF THE INVENTION

As the result of intensive extensive research and investigation accumulated by the present inventors in order to solve the above-mentioned subject, it has been found that a catalyst in which palladium and platinum are supported and which has a specific ratio of palladium to platinum and a specific supported amounts has a long-term service life as well as a high hydrogenation activity for a petroleum resin containing a sulfur component. Thus the present invention has been accomplished on the basis of the foregoing findings and information.

Specifically, the present invention is concerned with the following

1. A hydrogenation catalyst for petroleum resin containing a sulfur component which catalyst comprises palladium and platinum supported on an alumina as carrier at a ratio by mass of palladium to platinum being in the range of 2.5 to 3.5;

2. The hydrogenation catalyst for petroleum resin containing a sulfur component as set forth in the preceding item 1, which catalyst comprises 0.3 to 3.0% by mass of palladium and 0.1 to 1.0% by mass of platinum;

3. The hydrogenation catalyst for petroleum resin containing a sulfur component as set forth in the preceding item 1 or 2, wherein the petroleum resin is a polymerizate of a cyclopentadiene based compound and a vinyl aromatic compound.

4. A process for producing a hydrogenated petroleum resin which comprises bringing hydrogen and a petroleum resin containing a sulfur component into contact with each other in the presence of the catalyst as set forth in the preceding item 1 or 2.

5. The process for producing a hydrogenated petroleum resin as set forth in the preceding item 4, wherein the petroleum resin is a polymerizate of a cyclopentadiene based compound and a vinyl aromatic compound.

THE MOST PREFERRED EMBODIMENT TO CARRY OUT THE INVENTION

With regard to the palladium - platinum based bimetallic hydrogenation catalyst according to the present invention, the ratio by mass of palladium / platinum is in the range of 2.5 to 3.5, preferably 2.6 to 3.4.

The ratio by mass of palladium / platinum, when being less than 2.5 or more than 3.5, is ineffective in enhancing the catalytic activity.

The amount of the palladium in the palladium - platinum based bimetallic hydrogenation catalyst is 0.3 to 3.0% by mass, preferably 0.3 to 1.5% by mass. The amount of the platinum in the palladium - platinum based bimetallic hydrogenation catalyst is 0.1 to 1.0% by mass, preferably 0.1 to 0.5% by mass.

The amounts of the palladium and platinum supported thereon, when being less than 0.3% and 0.1% by mass, respectively, lead to failure in assuring sufficient catalytic activity, whereas the aforesaid amounts thereof, when being more than 3.0% and 1.0% by mass, respectively, are unpractical from the aspect of cost owing to a large amount of a noble metal to be used.

Such being the case, the amounts of the palladium and platinum being in the above-mentioned range, respectively, suppress the deterioration in the catalytic activity of the hydrogenation catalyst, thereby making it possible to steadily produce a high-quality hydrogenated petroleum resin at a low cost.

A carrier to be used therefor is alumina.

The above-mentioned catalyst can be prepared by any of "dipping process" which comprises preparing a water solution containing the compound or the like as a precursor of catalyst components (supporting solution), and dipping a carrier in the supporting solution thus prepared; "spraying process" which comprises spraying a supporting solution onto a carrier; and "impregnation process" which comprises preparing a supporting solution in an amount that corresponds to the amount of water absorbed in a carrier, and impregnating a carrier with whole amount of the solution thus prepared.

Any compound containing the catalyst components is usable provided that the compound is water soluble. Examples of usable compounds include chlorides such as palladium chloride and chloroplatinic acid, nitrates such as palladium nitrate and platinum nitrate, and an organic compound of palladium or platinum.

In the case where the above-mentioned catalyst is prepared by the dipping process, the catalyst is prepared by providing a water solution in which prescribed amounts of compounds of palladium and platinum are dissolved, dipping a prescribed amount of alumina carrier into the water solution, subsequently taking out the carrier followed by dewatering, and drying the same followed by calcination.

With regard to the physical properties of the alumina carrier, the surface area is at least 50 $m^2$ / gram, preferably at least 100 $m^2$ / gram. The drying temperature is in the range of 100 to 200°C, and the calcination is carried out at a temperature in the range of 300 to 800°C, preferably 300 to 600°C.

The usable form or shape of the catalyst may be any of cylindrical tablet, extrudate in the form of pellet and spherical product, and is preferably a molded article in the form of CDS (Computer Designed Shape) in which the geometrical surface area is enlarged from the viewpoint of catalytic activity and pressure loss.

The surface area of the alumina carrier of at most 50 $m^2$ / gram brings about insufficient catalytic activity. The drying temperature of 100°C at the highest is not economical because of a long time required in drying, whereas the drying temperature of 200°C at the lowest is unfavorable, since the supported compound containing the catalyst components begins decomposition to generate a gas, which causes a fear of corroding catalyst production equipment.

The calcination temperature, when being 300°C at the highest, gives rise to insufficient decomposition of the supported compound containing the catalyst components, whereas the calcination temperature, when being 800°C at the lowest, promotes sintering of the catalyst components without assuring a highly active catalyst, thereby both the cases being unfavorable.

The catalyst according to the present invention, is a bimetallic catalyst which comprises palladium and platinum as effective ingredients and which is supported on alumina, is prepared by any of dipping process, spraying process and impregnation process, and is effective in the hydrogenation of a petroleum resin containing a sulfur component. To the present hydrogenation reaction, are applicable a marketed catalyst available from Süd-Chemie Catalysts Inc. under the trade name "T-2657" which falls within the prescribed scope of the present invention in regard to the components and amounts contained, and the like catalyst.

The hydrogenated petroleum resin in relation to the present invention is that which is obtained by polymerizing a cyclopentadiene based compound and a vinyl aromatic compound in a solvent and further, hydrogenating remaining double bonds and aromatic rings in part or in whole.

The above-mentioned hydrogenated petroleum resin is blended in styrene - butadiene block copolymer and ethylene - vinyl acetate copolymer as a tackifier, and is used as a hot melt type adhesive.

Examples of the cyclopentadiene based compound include cyclopentadiene, methyl cyclopentadiene, ethyl cyclopentadiene, a dimer thereof and a codimer thereof.

Examples of the vinyl aromatic compound include, for instance, styrene, $\alpha$ -methylstyrene and vinyltoluene.

Examples of the polymerization solvent include an aromatic solvent, a naphthene base solvent and an aliphatic hydrocarbon base solvent.

The polymerization method adopted therefor may be any of continuous system and batch-wise system.

The polymerization conditions generally applied include a polymerization temperature in the range of 180 to 280°C and a polymerization time in the range of 0.5 to 10 hours.

The polymerization pressure, which varies depending upon the polymerization temperature, chemical compositions of the starting raw materials in a polymerization vessel, chemical compositions of the reaction mixture therein and the like, is usually in the range of 1 to 3 MPa.

The ratio by mass of usage of the starting raw materials is usually the cyclopentadiene based compound / vinyl aromatic compound being in the range of 10 / 90 to 90 / 10.

After the completion of the polymerization reaction, the solvent and low molecular weight polymerizates are separated from the mixed polymers thus obtained for recovering the same.

The process for hydrogenating the polymers remaining after the separation of the solvent and low molecular weight polymerizates may be adopted from any of continuous system and batch-wise system.

The hydrogenation reaction can be put into practice in the presence of a solvent such as an alicyclic hydrocarbon which is exemplified by cyclohexane, ethyl cyclohexane, dimethyl cyclohexane or the like or in the absence of a solvent. Of the above-cited solvents, ethyl cyclohexane is preferable.

The hydrogenation temperature is in the range of usually 100 to 300°C, preferably 120 to 280°C.

The hydrogenation temperature, when being unreasonably low, brings about insufficient proceeding of hydrogenation reaction, whereas the temperature, when being unreasonably high, leads to decomposition of the objective petroleum resin, whereby both the cases are unfavorable.

The hydrogenation reaction time is selected such that a liquid hourly space velocity (LHSV) is made to be in the range of 0.1 to 10 $hr^{-1}$, preferably 0.1 to 5 $hr^{-1}$.

The hydrogenation reaction pressure is in the range of usually 1 to 10 MPa, preferably 2 to 8 MPa.

In what follows, the present invention will be described in more detail with reference to working examples, which however shall never limit the present invention thereto.

⟨⟨Preparation of catalyst 1⟩⟩

There were prepared bimetallic catalysts A through C by the use of CDS type alumina as the carrier. The preparation method of each of the catalysts is described in the following.

⟨Preparation of catalyst A⟩

There was prepared 100 g of CDS type alumina as the carrier having a surface area of 180 $m^2$ / g, water absorption of 0.6 cc / g and a diameter of 1.6 mm.

Aside from the aforesaid carrier, there was prepared 200 cc of mixed water solution of palladium chloride and chloroplatinic acid which solution contained 1.0% of palladium and 0.34 % of platinum, respectively as catalyst components - supporting solution for the carrier.

Subsequently 100 g of the CDS type alumina as the carrier that had been prepared in advance was dipped in the above-prepared mixed water solution, and the resultant mixture was dewatered and thereafter dried overnight at 110°C.

The dried product was calcined at 400°C for 4 hours in an electric furnace to obtain catalyst A. The contents of palladium and platinum in the resultant catalyst A were as given in Table 1.

(Preparation of catalyst B)

Catalyst B was prepared in the same manner as the preparation of the catalyst A except that the concentrations of palladium and platinum in the catalyst components - supporting solution were made to be 2.0% and 0.68%, respectively. The contents of palladium and platinum in the resultant catalyst B were as given in Table 1.

(Preparation of catalyst C)

There was prepared 100 g of CDS type alumina as the carrier having a surface area of 180 $m^2$ / g, water absorption of 0.6 cc / g and a diameter of 1.6 mm.

Aside from the aforesaid carrier, there was prepared 30 cc of mixed water solution of palladium chloride and chloroplatinic acid which solution contained 2.0% of palladium and 1.0 % of platinum, respectively as catalyst components - supporting solution for the carrier.

Subsequently the carrier was transferred to a spray mixer, and 30 cc of the above-prepared mixed water solution was sprayed onto the carrier, while maintaining fluidized state.

Thereafter, the resultant mixture was dried overnight at 110°C, and the dried product was calcined at 600°C for 4 hours in an electric furnace to obtain catalyst C. The contents of palladium and platinum in the resultant catalyst C were as given in Table 1.

⟨⟨Preparation of catalyst 2⟩⟩

There was prepared bimetallic catalyst D by using zeolite of type Y as the carrier. The preparation method of the catalyst is described in the following.

(Preparation of catalyst D)

There was prepared 100 g of CDS type zeolite of type Y as the carrier having a diameter of 1.6 mm.

Aside from the aforesaid carrier, there was prepared 30 cc of mixed water solution of palladium chloride and chloroplatinic acid which solution contained 3.0% of palladium and 1.0 % of platinum, respectively as catalyst components - supporting solution for the carrier.

Subsequently the carrier was transferred to a spray mixer, and 30 cc of the above-prepared mixed water solution was sprayed onto the carrier, while maintaining fluidized state.

Thereafter, the resultant mixture was dried overnight at 110°C, and the dried product was calcined at 600°C for 4 hours in an electric furnace to obtain catalyst D. The contents of palladium and platinum in the resultant catalyst D were as given in Table 1.

⟨⟨Preparation of catalyst 3⟩⟩

There were prepared unary catalysts E and F by the use of CDS type alumina as the carrier. The preparation method of each of the catalysts is described in the following.

(Preparation of catalyst E)

There was prepared 100 g of CDS type alumina as the carrier having a surface area of 180 $m^2$ / g, water absorption of 0.6 cc / g and a diameter of 1.6 mm.

Aside from the aforesaid carrier, there was prepared 200 cc of mixed water solution of palladium chloride which solution contained 1.2 % of palladium as catalyst component - supporting solution for the carrier.

Subsequently 100 g of the CDS type alumina as the carrier that had been prepared in advance was dipped in the above-prepared mixed water solution, and the resultant mixture was dried overnight at 110°C, and the dried product was calcined at 400°C for 4 hours in an electric furnace to obtain catalyst E. The content of palladium in the resultant catalyst E was as given in Table 1.

(Preparation of catalyst F)

There was prepared 100 g of CDS type alumina as the carrier having a surface area of 180 $m^2$ / g, water absorption of 0.6 cc / g and a diameter of 1.6 mm.

Aside from the aforesaid carrier, there was prepared 30 cc of mixed water solution of chloroplatinic acid which solution contained 2.0% of platinum as catalyst component - supporting solution for the carrier.

Subsequently the carrier was transferred to a spray mixer, and 30 cc of the above-prepared mixed water solution was sprayed onto the carrier, while maintaining fluidized state.

Thereafter, the resultant mixture was dried overnight at 110°C, and the dried product was calcined at 400°C for 4 hours in an electric furnace to obtain catalyst F. The content of platinum in the resultant catalyst F was as given in Table 1.

Table 1

| Designation of Catalyst | Palladium (%) | Platinum (%) |
|---|---|---|
| A | 0.6 | 0.2 |
| B | 1.2 | 0.4 |
| C | 0.6 | 0.3 |

(continued)

| Designation of Catalyst | Palladium (%) | Platinum (%) |
|---|---|---|
| D | 0.9 | 0.3 |
| E | 0.7 | - |
| F | - | 0.6 |

Example 1

(1) Preparation of starting raw material for hydrogenation reaction (polymerization of cyclopentadiene based compound and a vinyl aromatic compound)

An autoclave was charged with 100 parts by mass of dicyclopentadiene, 100 parts by mass of styrene and 180 parts by mass of xylene as the solvent to proceed with polymerization reaction at 260°C for 6 hours.
After the polymerization reaction, xylene as the solvent and low molecular weight polymerizates were removed by depressurizing and pressure reducing operations.
Subsequently to 100 parts by mass of remaining resin were added 300 parts by mass of ethyl cyclohexane to dissolve the resin and then thiophene so that it is contained by 50 ppm by mass in terms of a sulfur component. The starting raw material for hydrogenation reaction was prepared in the above-described manner.

(2) Preparation of hydrogenated petroleum resin

The starting raw material for hydrogenation reaction which had been prepared in the preceding item (1) was subjected to continuous hydrogenation by a method comprising packing the catalyst A in a stainless steel-made tubular reactor having an outside diameter of 1 inch and a length of 50 cm, and passing the starting raw material for hydrogenation reaction at a liquid hourly space velocity (LHSV) of 4 $hr^{-1}$ with hydrogen gas at a flow rate of 86 times by volume the flow rate of the starting raw material for hydrogenation reaction to proceed with polymerization reaction at 250°C and 4 MPa and to examine the change with the lapse of time, in the degree of hydrogenation reaction of aroma (aromatic ring) by the following formula:

$$\text{Degree of hydrogenation reaction of aroma } (\%) = \{(\text{aroma content in the starting raw resin} - \text{aroma content in the hydrogenated resin}) / \text{aroma content in the starting raw resin}\} \times 100$$

(3) Evaluation of reaction performance

The degree of hydrogenation reaction of aroma in a state of stabilized activity after passing 50 g of the resin per 1 g of catalyst was 39%. The operation was continued as such, while passing 1000 g of the resin per 1 g of catalyst. Then no deterioration in the catalytic activity was observed at all.

Example 2

The hydrogenation reaction was put into practice in the same manner as in Example 1 except that the catalyst B was used in place of the catalyst A.
The degree of hydrogenation reaction of aroma after passing 50 g of the resin per 1 g of catalyst was 34%. The operation was continued as such, while passing 100 g of the resin per 1 g of catalyst. Then the degree of hydrogenation reaction of aroma was 33%.

Comparative Example 1

The hydrogenation reaction was put into practice in the same manner as in Example 1 except that the catalyst C was used in place of the catalyst A.
The degree of hydrogenation reaction of aroma after passing 50 g of the resin per 1 g of catalyst was 27%.

The operation was continued as such, while passing 100 g of the resin per 1 g of catalyst. Then the degree of hydrogenation reaction of aroma was decreased as low as 20%.

Comparative Example 2

The hydrogenation reaction was put into practice in the same manner as in Example 1 except that the catalyst D was used in place of the catalyst A.
The degree of hydrogenation reaction of aroma after passing 50 g of the resin per 1 g of catalyst was 12%. The operation was continued as such, while passing 100 g of the resin per 1 g of catalyst. Then the degree of hydrogenation reaction of aroma was decreased as low as 9%.

Comparative Example 3

The hydrogenation reaction was put into practice in the same manner as in Example 1 except that the catalyst E was used in place of the catalyst A.
The degree of hydrogenation reaction of aroma after passing 20 g of the resin per 1 g of catalyst was as low as 0%.

Comparative Example 4

The hydrogenation reaction was put into practice in the same manner as in Example 1 except that the catalyst F was used in place of the catalyst A.
The degree of hydrogenation reaction of aroma after passing 50 g of the resin per 1 g of catalyst was 10%.

INDUSTRIAL APPLICABILITY

The catalyst according to the present invention is imparted with high hydrogenation reaction activity even in the presence of a sulfur component as compared with hydrogenation catalysts that have hitherto been conventionally employed (unary noble metal catalysts such as palladium, platinum, rhodium and ruthenium and nickel based catalyst), and accordingly is capable of steadily producing petroleum resin for a long period of time.

**Claims**

1.  A hydrogenation catalyst for petroleum resin containing a sulphur component which catalyst comprises palladium and platinum supported on an alumina as carrier at a ratio by mass of palladium to platinum being in the range of 2.5 to 3.5.

2.  The hydrogenation catalyst for petroleum resin containing a sulphur component according to claim 1, which catalyst comprises 0.3 to 3.0 % by mass of palladium and 0.1 to 1.0 % by mass of platinum.

3.  The hydrogenation catalyst for petroleum resin containing a sulphur component according to claim 1, wherein the petroleum resin is a polymerizate of a cyclopentadiene based compound and a vinyl aromatic compound.

4.  A process for producing a hydrogenated petroleum resin which comprises bringing hydrogen and the petroleum resin containing a sulfur component into contact with each other in the presence of the catalyst as set forth in claim 1 or 2.

5.  The process for producing a hydrogenated petroleum resin according to claim 4, wherein the petroleum resin is a a polymerizate of a cyclopentadiene based compound and a vinyl aromatic compound.

**Patentansprüche**

1.  Hydrierungskatalysator für Petroleumharz, das eine Schwefelkomponente enthält, wobei der Katalysator auf Aluminiumoxid als Träger geträgertes Palladium und Platin in einem Gewichtsverhältnis Palladium zu Platin im Bereich von 2,5 bis 3,5 umfasst.

2.  Hydrierungskatalysator für Petroleumharz, das eine Schwefelkomponente enthält, nach Anspruch 1 , wobei der Katalysator 0,3 bis 3,0 Ges.-% Palladium und 0,1 bis 1,0 Ges.-% Platin umfasst.

3. Hydrierungskatalysator für Petroleumharz, das eine Schwefelkomponente enthält, nach Anspruch 1 , wobei das Petroleumharz ein Polymerisat einer Verbindung auf Cyclopentadienbasis und einer vinylaromatischen Verbindung ist.

4. Verfahren zur Herstellung eines hydrierten Petroleumharzes, welches In-Kontakt-Bringen von Wasserstoff und dem Petroleumharz, das eine Schwefelkomponente enthält, in Gegenwart des Katalysators wie in Anspruch 1 oder 2 angegeben, umfasst.

5. Verfahren zur Herstellung eines hydrierten Petroleumharzes nach Anspruch 4, wobei das Petroleumharz ein Polymerisat einer Verbindung auf Cyclopentadienbasis und einer vinylaromatischen Verbindung ist.

**Revendications**

1. Catalyseur pour l'hydrogénation de résine de pétrole contenant un composant soufré, lequel catalyseur comprend le palladium et le platine supportés sur une alumine en tant qu'un support, à un rapport par masse du palladium au platine étant de 2,5 à 3.5.

2. Catalyseur pour l'hydrogénation de résine de pétrole contenant un composant soufré selon la revendication 1, lequel catalyseur comprend 0,3 à 3,0 % par masse du palladium et 0,1 à 1,0 % par masse du platine.

3. Catalyseur pour l'hydrogénation de résine de pétrole contenant un composant soufré selon la revendication 1, dans lequel la résine de pétrole est un polymérisate d'un composé à base de cyclopentadiène et d'un composé vinyle aromatique.

4. Procédé pour la production d'un résine de pétrole hydrogénée qui comprend l'étape de mettre en contact de l'hydrogène et la résine de pétrole contenant un composant soufré l'un avec l'autre en présence du catalyseur tel que présenté dans la revendication 1 ou 2.

5. Procédé pour la production d'une résine de pétrole hydrogénée selon la revendication 4, dans lequel la résine de pétrole est un polymérisate d'un composé à base de cyclopentadiène et d'un composé vinyle aromatique.

**EP 1 552 881 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61201 A

- EP 0947248 A1